# EUROPEAN PATENT SPECIFICATION

(11) **EP 3 781 742 B1**
(45) Date of publication and mention of the grant of the patent: **02.11.2022**
(21) Application number: 18915737.3
(22) Date of filing: 16.04.2018
(51) Int. Cl.: D21H 27/32, A47K 10/16, B31F 1/07, B32B 29/00, B32B 38/06, D21H 27/00

(54) **MULTI-PLY TISSUE PAPER PRODUCT AND METHOD OF MANUFACTURING THE SAME**
MEHRLAGIGES TISSUEPAPIERPRODUKT UND VERFAHREN ZUR HERSTELLUNG DAVON
PRODUIT PAPIER SANITAIRE À MULTIPLES ÉPAISSEURS ET PROCÉDÉ DE FABRICATION DE CELUI-CI

(43) Date of publication of application: 24.02.2021
(73) Proprietor: Essity Hygiene and Health Aktiebolag, 405 03 Göteborg (SE)
(72) Inventor: WEISANG, Nicolas, 68320 Kunheim (FR); PLEYBER, Emilie, 68320 Kunheim (FR)
(74) Representative: Hoffmann Eitle
(86) International application number: PCT/SE2018/050384
(87) International publication number: WO 2019/203699

(56) References cited:
- WO-A1-01/12902
- WO-A1-01/12902
- WO-A1-2016/113054
- WO-A1-2016/113054
- DE-U1- 9 016 218
- US-A- 3 765 997
- US-A- 6 048 603

## Description

### TECHNICAL FIELD

The present disclosure is generally related to multi-ply tissue paper products and, more specifically, to multi-ply tissue paper products that are wound onto cores and/or folded for use.

### BACKGROUND

The term "tissue paper" as used herein covers the base (raw) tissue paper ("tissue paper web") as obtained from the tissue paper machine, as well as one-ply or multi-ply final products ("tissue paper products") made of base tissue, and tailored to the end user's needs by further converting steps.

As "tissue paper web" we understand the one-ply base tissue as obtained from the tissue machine. The tissue paper web is a sheet of paper made by a process comprising the steps of: forming an aqueous suspension of pulp fibers i.e., the so-called "furnish," depositing the aqueous suspension onto a wire (fabric) to form a wet web, dewatering, drying, and creping the web.

The tissue paper web has a basis weight of from about 8 to about 50 g/m², in particular from about 10 to about 30 g/m², and more particularly from about 12 to about 25 g/m².

The tissue paper web of may be composed of one or more layers (i.e., single-layered web or multi-layered web). The term "layer" refers to a stratum within the web having a defined fiber composition. The one or more layers is/are formed by depositing one or more streams of pulp furnishes onto a wire with a pressurized single- or multi-layered headbox. This technique is well-known to those skilled in the art. It renders possible the use of different kinds of fibers in each layer of the web. The "multi-layered" tissue paper web may have, for example between 2 and 5 layers, and more specifically 2 or 3 layers.

The term "ply" as used herein refers to one ply of tissue paper in the final tissue paper product as obtained after processing ("converting") one base tissue paper web. The term "multi-ply" as used herein refers to several plies of tissue paper in the final tissue paper product as obtained after processing ("converting") several base tissue paper webs. Each individual ply consists of a tissue paper web comprising one or more layers e.g., one, two, three or four layers.

Based on the underlying compatibility of the production processes (wet forming), "tissue" production is counted among the papermaking techniques. The production of tissue is distinguished from paper production by its relatively low basis weight and its much higher tensile energy absorption index.

The tensile energy absorption index is arrived at from the tensile energy absorption in which the tensile energy absorption is related to the test sample volume before inspection (length, width, thickness of sample between the clamps before tensile load). Paper and tissue paper also differ in general with regard to the modulus of elasticity that characterizes the stress-strain properties of these planar products as a material parameter.

A tissue's high tensile energy absorption index results from the outer or inner creping. The former is produced by compression of the paper web adhering to a dry cylinder as a result of the action of a crepe doctor or in the latter instance as a result of a difference in speed between two wires ("fabrics"). This causes the still moist, plastically deformable paper web to be internally broken up by compression and shearing, thereby rendering it more stretchable under load than an uncreped paper. A high tensile energy absorption index can also be achieved by imparting to the tissue a 3D structure by means of the wires themselves. Most of the functional properties typical of tissue and tissue products result from the high tensile energy absorption index (see DIN EN 12625-4 and DIN EN 12625-5).

Typical properties of tissue paper include the ready ability to absorb tensile stress energy, their drapability, good textile-like flexibility, properties which are frequently referred to as bulk softness, a high surface softness, a high specific volume with a perceptible thickness, as high a liquid absorbency as possible and, depending on the application, a suitable wet and dry strength as well as an interesting visual appearance of the outer product surface. These properties allow tissue paper to be used, for example, as cleaning cloths (e.g., household towels), sanitary products (e.g., toilet paper, hand towels), paper handkerchiefs, cosmetic wipes (facial tissues) or as serviettes/napkins.

The "pulp fibers" are selected from chemical pulp fibers, mechanical pulp fibers subjected to a chemical pretreatment and mixtures thereof.

"Chemical pulps" are, according to DIN 6730, fibrous materials obtained from plant raw materials of which most non-cellulosic components have been removed by chemical pulping without substantial mechanical post treatment.

Use can also be made of mechanical pulps subjected to chemical pre-treatment, such as chemo-mechanical pulp ("CMP" pulp), or chemo-thermo- mechanical pulp ("CTMP" pulp).

As "hardwood fibers" we understand fibrous pulp derived from the woody substance of deciduous trees (angiosperms). Typically, hardwood fibers are "short" fibers having a length of from about 1 to about 2 mm, a diameter of from about 15 to about 30 pm, and a wall thickness of from about 2 to about 3 pm. Hardwood such as Eucalyptus is normally pulped by the Kraft process.

Hardwood fibers contemplated for use in the present disclosure may originate from eucalyptus, beech, aspen, acacia, and/or birch, and particularly from eucalyptus.

As "softwood fibers" we understand fibrous pulp derived from the woody substance of coniferous trees (gymnosperms). Typically, softwood fibers are "long" fibers having a length of from about 3 to about 4 mm, a diameter of from about 30 to about 40 pm, and a wall thickness of from about 3 to about 4 pm. They are normally pulped by the Kraft process.

Softwood fibers contemplated for use in the present disclosure may originate from pine, spruce, red cedar, douglas fir, hemlock, and/or larch. For example, softwood fibers may be Northern Bleached Softwood Kraft (NBSK) fibers. It is contemplated that at least part of the NBSK fibers to be used are refined, for example to a degree of fineness of from about 19 to about 35°SR, e.g., from about 19 to about 26°SR (Schooper-Riegler number).

As "non-wood fibers" we understand fibrous pulp derived from the non-woody substance of plants such cotton, bagasse, hemp, linen, sisal, straw, flax, or miscanthus.

The tissue paper can be produced from paper-making fibers according to "Conventional Processes" as in the manufacture of "Dry Crepe Tissue" or "Wet Crepe Tissue" or "Processes for Structured Tissue" such as the Through Air Drying (TAD) manufacturing method, the manufacture of uncreped through-air dried (UCTAD) tissue, or alternative manufacturing methods e.g., the Advanced Tissue Molding System (ATMOS) of the company known as Voith, or Energy Efficient Technologically Advanced Drying eTAD of the company known as Georgia Pacific, or Structured Tissue Technology SST of the company known as Metso Paper. Hybrid processes like NTT (New Textured Tissue of the company known as Metso Paper), which are alterations of the conventional processes, can be used also.

Once the web of absorbent substrate has been manufactured, a distinct manufacturing operation called converting operation is necessary to form the end product (e.g., the paper towel, toilet tissue rolls, bathroom tissue, wiping tissue, kitchen tissue rolls, and handkerchiefs). During the converting operation, several of such sheets, also called plies, can be combined to form the end product.

It is possible to combine several plies together to confer particular properties on a sheet such as thickness, softness, and bulkiness.

Several plies may be combined together by a combining operation of a chemical nature (e.g., by adhesive bonding), or of a mechanical nature (e.g., by knurling or embossing), or a combination of both. During adhesive bonding, a film of adhesive is deposited over some or the entirety of the surface of one of the plies, then the adhesive-treated surface is placed in contact with the surface of at least one other ply. During the mechanical combination, the plies may be combined by knurling, or by compression, or by embossing. Embossing is a deformation in the thickness of the ply or of the multiple plies. It results in a ply having a particular relief or indentation. The thickness of the ply or of the multiple plies is increased after embossing compared with its initial thickness.

DE9016218 and WO2016113054 describe a multi-layered paper, in particular a multi-layered toilet paper with at least one top layer, a middle layer and a bottom layer. The top layer and the bottom layer have an embossing on the edge for forming a closed lumen, in which the middle layer is loosely received. The top with the middle layer have a surface embossing which serves to produce a cleaning structure.

High caliper tissue product generates dust of loose cellulosic fibers at the plain cut edge (peripheral border), and also at the perforated edge in use, in particular when detaching a sheet of product from the strip forming the roll. Such loose fibers are particularly uncomfortable for the user because loose fibers may be annoying or otherwise undesirable. Further, migration of loose fibers may create inhomogeneities of fiber repartition within the inner layer, creating various zones of different calipers in the product that are detrimental to the quality perceived by the user. Furthermore, it is also desired to take into account the current trend of industrial manufacturing speed of converting process (up to 1200 m/min) generating product constraints.

There is a need to avoid, or at least greatly reduce the generation of loose fibers when multi-ply tissue paper product is used and/or when sections of that product is separated from a strip of the product by consumers. Further, there is a need to improve the thickness, softness, bulkiness, absorption capacity, absorption speed and/or strength (i.e., properties) of the multi-ply tissue products. Further, this should be obtained in a way compliant with the current trend of industrial manufacturing speeds of converting processes.

### SUMMARY

It may be desirable to provide a multi-ply tissue paper product that avoids, or at least greatly reduces, the generation of loose fibers associated with the use of multi-ply tissue paper product or when sections of that product are separated from one another by consumers.

According to one aspect, there is provided a multi-ply tissue paper product comprising at least two plies made of tissue paper base-sheet, comprising:
- a high caliper ranging from about 0.5 to about 1.5 mm, high bulk ranging from about 25 to about 75 cm³/g absorbent inner layer including loose cellulosic fibers positioned between a first outer ply on one side and a second outer ply on another side;
- a first association zone and a second zone where the inner layer, the first outer ply and the second outer ply are associated together;
in which
- the first association zone is positioned at an edge of the multi-ply tissue paper product according to a first pattern of association elements having a high elements density corresponding to a surface association of at least about 6%, in particular at least about 8%, especially at least about 10% of a total surface of said product arranged to close the edge of the multi-ply tissue paper product with respect to the loose cellulosic fibers; and
- the second zone is positioned at a central usage area of the multi-ply tissue paper product;
and in which the first pattern of association elements comprises at least two parallel lines of association elements with a first distance d1 between two adjacent lines less than half square root of three of a mean fluff fiber length Im and a second distance d2 between adjacent association elements in a line less than the mean fluff fiber length Im.

The second zone is a second association zone positioned at said central usage area of the multi-ply tissue paper product according to a second pattern of association elements having an elements density corresponding to a surface association ranging from about 1.5% to about 3% of the central usage area of that product arranged to stabilize the loose cellulosic fibers in-between the first outer ply and the second outer ply.

The second zone may be a second association zone positioned at the central usage area of the multi-ply tissue paper product according to a second pattern of association elements defined such that in a circle ranging from about 0.9 to about 1.1 of the mean fluff fiber length around each association element, a ratio between a maximum thickness of the product and a minimum thickness of the product within that circle is above about 14 such as to stabilize the loose cellulosic fibers in-between the first outer ply and the second outer ply.

The multi-ply tissue paper product may be a strip comprising regularly spaced perforations defining individual product sections, and in which the first association zone may be further positioned along perforations on adjacent individual product sections.

The first association zone may cover up to about 50% of a total surface of the multi-ply tissue paper product, and the second zone covers a remaining surface amounting more than about 50% of that total surface.

The first and the second outer plies may each have a grammage ranging from about 10 to about 60 g/m², in particular from about 15 to about 40 g/m², most particularly from about 15 to about 25 g/m².

The inner layer may be made of fluff material and may have a grammage ranging from about 20 to about 60 g/m², in particular from about 25 to about 55 g/m², most particularly from about 30 to about 50 g/m².

According to another aspect, there is provided a method for manufacturing multi-ply tissue paper product having at least two plies made of tissue paper base-sheet, a high caliper ranging from about 0.5 to about 1.5 mm, high bulk ranging from about 25 to about 75 cm³/g absorbent inner layer including loose cellulosic fibers being positioned between a first outer ply on one side and a second outer ply on another side, in which the manufacturing method includes:
- interposing the loose cellulosic fibers in-between the first and second outer plies;
- associating together the first outer ply, the inner layer and the second outer ply by means of a first association zone and a second zone at a central usage area of the multi-ply tissue paper product by embossing the first association zone at an edge of the multi-ply tissue paper product according to a first pattern of association elements having a high elements density corresponding to a surface association of at least about 6%, in particular at least about 8%, especially at least about 10% of a total surface of that product such as to close the edge of the multi-ply tissue paper product with respect to the loose cellulosic fibers;
and in which embossing the first pattern of association elements includes providing the edge of the multi-ply tissue paper product with at least two parallel lines of association elements with a first distance d1 between two adjacent lines less than half square root of three of a mean fluff fiber length Im and a second distance d2 between adjacent association elements in a line less than the mean fluff fiber length Im.

Associating together the first outer ply, the inner layer and the second outer ply further comprises embossing the second zone as a second association zone at the central usage area of the multi-ply tissue paper product according to a second pattern of association elements having an elements density corresponding to a surface association ranging from about 1.5% to about 3% of the central usage area of the product such as to stabilize the loose cellulosic fibers in-between the first outer ply and the second outer ply.

Associating together the first outer ply, the inner layer and the second outer ply may further comprise embossing the second association zone at a central usage area of the multi-ply tissue paper product according to a second pattern of association elements defined such that in a circle ranging from about 0.9 to about 1.1 of the mean fluff fiber length around each association element, a ratio between a maximum thickness of the product and a minimum thickness of the product within the circle is above about 14 such as to stabilize the loose cellulosic fibers in-between the first outer ply and the second outer ply.

The manufacturing method may further include spraying the absorbent inner layer with an adhesive prior to the association.

The multi-ply tissue paper product may be formed as a continuous strip comprising regularly spaced perforations defining individual product sections, and in which embossing the first association zone may further include embossing along perforations on adjacent individual product sections.

Disclosed, but not claimed, there is provided a converting machine/line for implementing the method for manufacturing a multi-ply tissue paper product as described above. The converting machine/line may include an embossing unit comprising an engraved cylinder having an embossing motif defining a first pattern of association elements having a high elements density corresponding to a surface association of at least about 6%, in particular at least about 8%, especially at least about 10% of a total surface of that product at an edge of the embossing motif, the first pattern of association elements comprising at least two parallel lines of association elements with a first distance between two adjacent lines less than half square root of three of a mean fluff fiber length and a second distance between adjacent association elements in a line less than the mean fluff fiber length.

The engraved cylinder or another embossing means like a second engraved cylinder may further define a second pattern of association elements having an elements density corresponding to a surface association ranging from about 1.5% to about 3% at a central portion of the embossing motif. Alternatively, the engraved cylinder or another embossing means like a second engraved cylinder may further define a second pattern of association elements defined such that in a circle ranging from about 0.9 to about 1.1 of the mean fluff fiber length around each association element defined by an embossing protuberance, a ratio between a maximum height of embossing protuberances and a minimum height of embossing protuberances within the circle is above fourteen at a central portion of the embossing motif.

According to still a further aspect, there is provided a roll of sheet material including a multi-ply tissue paper product according to one embodiment wound onto a core.

According to still a further aspect, there is provided a folded sheet material including a multi-ply tissue paper product according to one embodiment cut, stacked and folded into a package.

According to still a further aspect, there is provided a use of a multi-ply tissue paper product according to one embodiment as paper towels, toilet tissue rolls, bathroom tissues, wiping tissues, kitchen tissue rolls, facial tissues, handkerchiefs or napkins.

The multi-ply tissue paper product according to one embodiment enables an efficient entrapment of the fluff material forming the absorbent inner layer by providing an original compromise between high elements density in the peripheral zone to keep the fluff material trapped and low elements density in the central usage zone of the product to maintain caliper and softness. Therefore, maintaining a balanced and homogenous distribution of the fluff material enables keeping absorbency and softness, while no stiffness results from embossing elements of the association zones. In particular transportation of moisture from the outer plies towards the inner layer is quick, efficient and maintained over time. Further, tearing/pealing issue during wiping requires a high delamination force that most users cannot achieve. At the same time, the migration of loose cellulosic fibers and the generation of loose cellulosic fibers dust is avoided, or at least greatly reduced. Furthermore, the multi-ply tissue paper product is fully flushable in the water without detrimental effect to environment.

Other advantages will become apparent from the hereinafter description of embodiments of the invention.

### BRIEF DESCRIPTION OF THE DRAWINGS

The present invention is illustrated by way of examples and is not limited to the accompanying drawings, in which like references indicate similar elements:
- FIGS. 1A and 1B are side cross-sectional views in a multi-ply tissue paper product schematically illustrating an embodiment;
- FIGS. 2 and 3 are bottom (or top) views of a multi-ply tissue paper product schematically illustrating a first example and a second example of first and second association zones of the embodiment of FIG. 1;
- FIG. 4 is an enlarged bottom (or top) view schematically illustrating an example of edge embossing at a corner of the multi-ply tissue paper product presented in FIGS. 2 and 3;
- FIGS. 5 and 6 are bottom (or top) views of a multi-ply tissue paper product schematically illustrating a third example and a fourth example of first association zone and second association zone of the embodiment of FIG. 1, respectively;
- FIG. 7 schematically and partially illustrates an example of a converting assembly line and method for manufacturing multi-ply tissue paper product according to the embodiment of FIG. 1, respectively;
- FIG. 8 schematically and partially illustrates a part of the converting assembly of FIG. 7 where the cutting lines are brought to logs of the multi-ply tissue paper products; and
- FIG. 9 schematically and partially illustrates the positioning of the perforation lines with respect to the first association zone and the second association zone.

### DETAILED DESCRIPTION OF PARTICULAR EMBODIMENTS

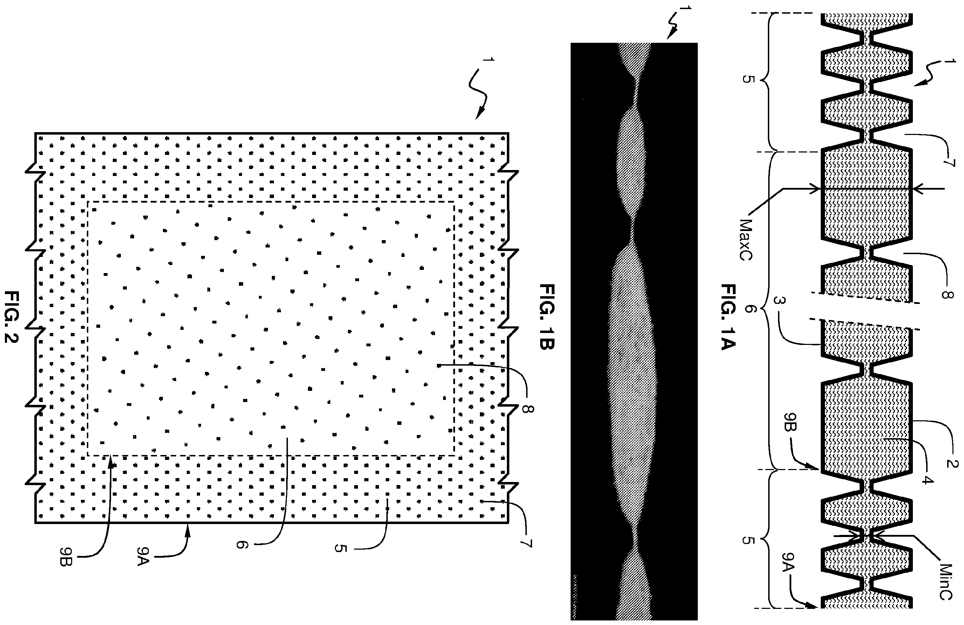

FIG. 1A is a side cross-sectional view schematically illustrating the layer structure of a multi-ply tissue paper product 1 according to an example embodiment. FIG. 1A is schematic for the sake of clarity in the sense that it shows plies that are clearly separated from each other and crushing zones resulting from embossing operations. FIG. 1B is a partial cross-sectional picture based on a real product that has been cut.

The multi-ply tissue paper product 1 comprises three plies, a first outer ply 2, a second outer ply 3, and an inner ply 4. The first outer ply 2 and the second outer ply 3 are made of tissue paper base-sheet. Each of these plies can be made of tissue paper base-sheet produced either by conventional manufacturing methods as in the manufacture of for example "Dry Crepe Tissue" or "Wet Crepe Tissue," or "Structured Tissue" manufacturing methods as for example the "Through Air Drying" (TAD) manufacturing method. For example, the first outer ply has a grammage about 20 g/m².Similarly, the second outer ply has a grammage about 20 g/m².The inner ply 4 is an absorbent inner layer including loose cellulosic fibers. For example, the inner layer may be made of fluff material (e.g., fluff of cellulosic pulp) having an absorbency about 1200 g/m², a grammage about 40g/m² and mean fiber length ranging from about 1.5 mm to about 3 mm. The inner ply 4 is a high caliper ranging from about 0.5 to about 1.5 mm, high bulk ranging from about 25 to about 75 cm³/g absorbent layer. Thus, in the present example, the multi-ply tissue paper product has a total grammage of about 80 g/m², and a total bulk ranging from about 20 to about 30 cm³/g. The inner ply 4 is positioned between the first outer ply 2 on one side and the second outer ply 3 on another side. The inner ply mainly brings thickness and absorption capacity to the multi-ply tissue paper product while the outer plies mainly bring softness and absorption speed to the product.

The multi-ply tissue paper product 1 comprises a first association zone 5 and a second association zone 6 in which the first outer ply 2, the second outer ply 3, and the inner layer 4 are associated together. The first outer and second outer plies 2, 3 are embossed such that the protuberances of the respective association zones are in a pin to flat configuration as illustrated in FIGS. 1A and 1B. As an alternative, the first outer and second outer plies 2, 3 may be embossed such that the protuberances of the respective association zones are in a pin to pin configuration.

The first association zone 5 is positioned at a peripheral area, or edge of the multi-ply tissue paper product 1. The first association zone 5 includes a first pattern of association elements, for example dots 7 having a high elements density corresponding for example to a surface association of at least about 6% of the total surface of the product (e.g., an elements density of at least about 10 dots/cm²). The function of the first association zone 5 is to close the edge of the multi-ply tissue paper product 1 with respect to the loose cellulosic fibers of the inner layer 4. This enables avoiding, or at least greatly reducing, the dust generation caused by loose cellulosic fibers leaving the inner layer 4 at the edge 9A of the multi-ply tissue paper product 1.

The second association zone 6 is positioned at a central usage area of the multi-ply tissue paper product 1. The second association zone 6 includes a second pattern of association elements, for example dots 8 having a low elements density corresponding for example to a surface association ranging from about 1.5 to about 3 % of the total surface of the central usage area (e.g., a elements density of less than about 2,5 dots/cm²). The function of the second association zone 6 is to stabilize the loose cellulosic fibers in-between the first outer ply 2 and the second outer ply 3. This enables avoiding, or at least greatly reducing, the creation of loose cellulosic fibers balls vs. void zone creating caliper variation migration. Such migration may be caused by loose cellulosic fibers migrating into the inner layer 4 below the central usage area towards the boundary 9B of the central usage area of the multi-ply tissue paper product 1. Further, the second pattern of association elements 8 should not squeeze the inner layer caliper.

It is to be noted that both association zones 5, 6 may also have an aesthetical purpose.

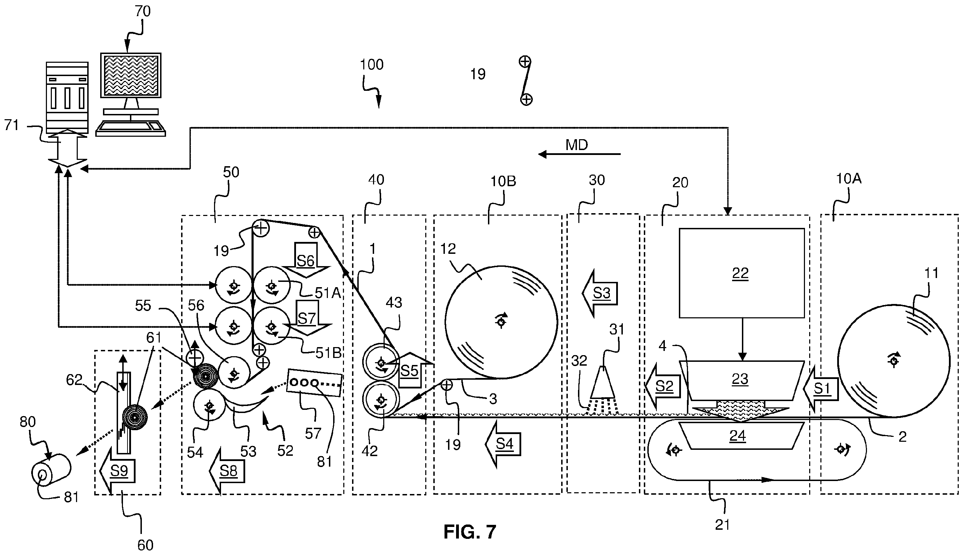

Optionally, the plies may be coupled together by an adhesive through a ply-bonding operation that will be explained in relation with FIG. 7. In particular, the first outer ply 2 is bonded to the second outer ply 3 and the inner ply 4 at the level of at least the tips of the embossing protuberances (association elements 7, 8). Thus, a sufficient association and coherency of the multi-ply tissue paper product 1 is achieved. Because the gluing areas are limited to the distal planar areas of the protuberances of the embossed first and second outer ply 2, 3, the resulting stiffness of the multi-ply tissue paper product 1 can be predefined. Thus, the resulting stiffness may be adjusted by an appropriate compromise between the bonding of the plies and the resulting stiffness.

The following table shows measurements made on an example of a product as shown in FIG. 1B:

| | Dots Density (mm²/cm²) | Fluff Grammage (g/m²) | Min Caliper MinC (µm) | Max Caliper MaxC (µm) | Caliper Ratio (Min Caliper / Max Caliper |
|---|---|---|---|---|---|
| Edge Area | 14,9 | 40 | 73 | 713 | 10,2% |
| Central Usage Area | 1,22 | 40 | 71 | 1238 | 5,7% |

The above measurements are not made by a precision micrometer according to standard EN ISO 12625-3:2014, Part 3. This standard is not adequate to discriminate lower and upper caliper over a determined surface as it uses a pressure foot that is not adapted to measure maximum caliper zones of the product. The measurements are instead made based on two complementary measurements using non-contact, optical, three-dimensional, focus-variation device e.g., a device known by the trade name InfiniteFocusSL commercialized by Alicona, from Graz, Austria. A first one is a 3D image analysis on each side of the sample in order to measure the average depth between the upper elements and the lower elements of the embossing (MaxC - see FIG. 1A). A second one is 2D image analysis of the section of the sample in order to measure the average caliper of the embossing area (MinC - see FIG. 1A).

FIG. 2 is a bottom (or top) view of a multi-ply tissue paper product 1 schematically illustrating a first example of first association zone 5 and second association zone 6 of the example embodiment of FIG. 1. In the first example, the second association zone 6 defining the boundary 9B of the central usage area has a substantially rectangular shape, while the first association zone 5 is extending between the edge 9A of the product 1 and this boundary 9B. The peripheral area forms a frame-like shape.

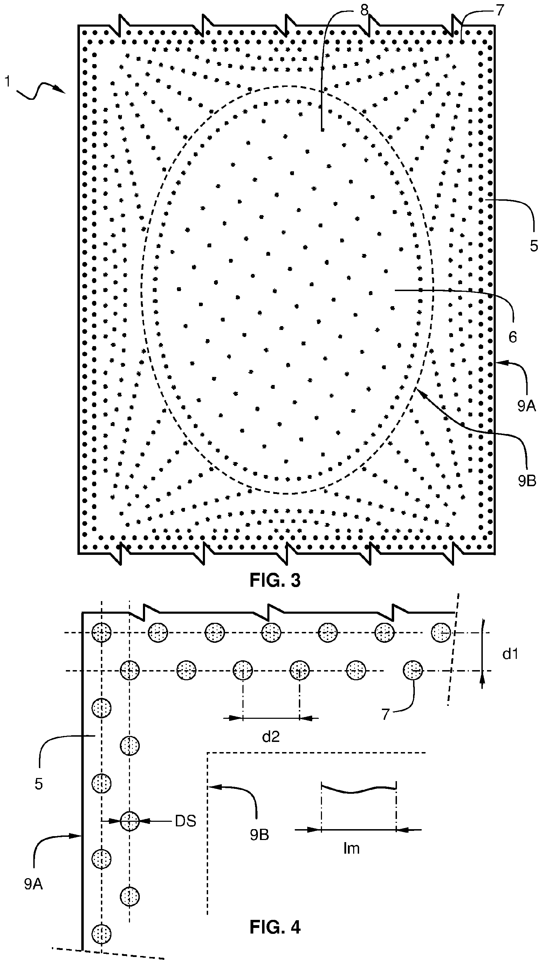

FIG. 3 is a bottom (or top) view of a multi-ply tissue paper product 1 schematically illustrating a second example of first association zone 5 and second association zone 6 of the example embodiment of FIG. 1. In the second example, the second association zone 6 defining the boundary 9B of the central usage area has a substantially elliptical shape, while the first association zone 5 is positioned between the edge 9A of the product 1 and this boundary 9B. The boundary of the elliptical shape may be defined by a higher density of elements as depicted vs. the central part of the elliptical shape, thus resulting in the formation of some kind of cushion. In this example, the esthetical effect of the association zones 5 and 6 can be seen, the embossing protuberances forming a decor embossing pattern comprising a dotted ellipse in a central part of the sheet, a plurality of dotted lines extending from each corner towards the dotted ellipse according to different angles, and dotted curves along each edge of the sheet. The central part of the sheet within the central usage area defined by the dotted ellipse is also provided with parallel lines of dots extending substantially inclined with regards to the edge of the sheet.

In the examples of FIGS. 2 and 3, the depicted area corresponds to one sheet of toilet paper, for example a rectangular shape of 10 cm x 12 cm dimensions. Further, in the examples of FIGS. 2 and 3, the first association zone may cover up to 50%, for example 20% of a total surface of the multi-ply tissue paper product 1, and the second association zone may cover the remaining surface, namely a surface amounting more than 50%, for example 80% of the total surface of the multi-ply tissue paper product 1.

FIG. 4 is an enlarged bottom (or top) view schematically illustrating an example of embossing of the peripheral area at a corner of the multi-ply tissue paper product 1.

The first pattern of association elements 7 comprises at least two parallel lines of dots with a first distance d1 between two adjacent lines less than half square root of three of a mean fluff fiber length Im and a second distance d2 between adjacent dots in a line less than the mean fluff fiber length Im. One loose fiber is schematically represented in FIG. 4 for the purpose of showing the mean fluff fiber length Im. The size (diameter) DS of each dot 7 ranges from about 0.5 mm to about 2.0 mm, in particular from about 1.0 mm to about 1.2 mm. A loose cellulosic fiber may have a mean length Im ranging from about 1.5 mm to about 3.0 mm.

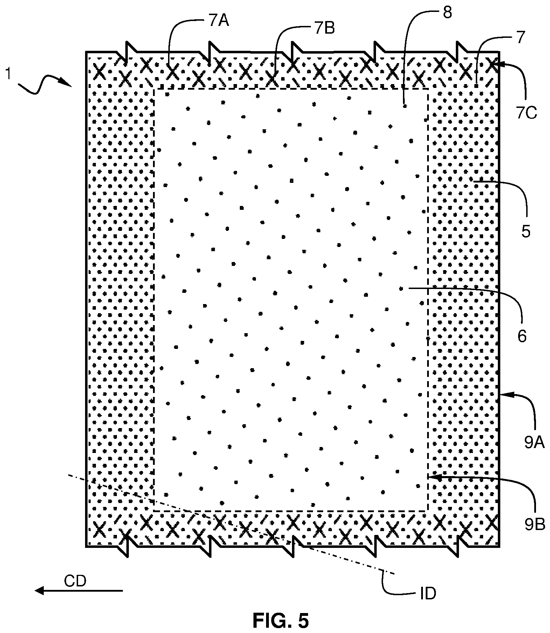

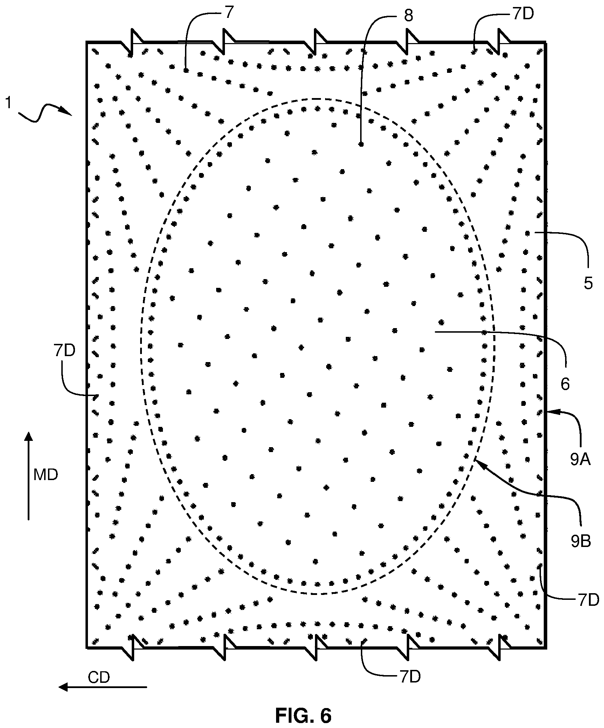

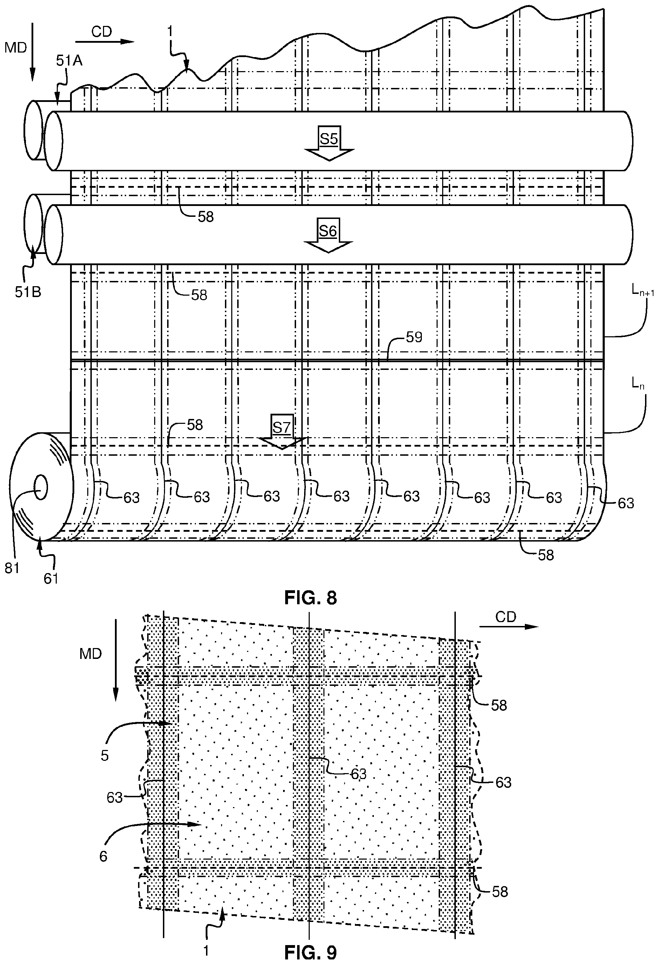

Similarly to the examples depicted in FIGS. 2 and 3, FIGS. 5 and 6 are bottom (or top) views of the multi-ply tissue paper product schematically illustrating a third example and a fourth example of first association zone and second association zone of the embodiment of FIG. 1, respectively. The third example of FIG. 5 differs from the first example of FIG. 2 in that the first pattern of association elements 7 comprises a mix of dots and of lines 7A, 7B of different orientation. In this particular example, the lines 7A and 7B may be combined to form crosses 7C. The crosses 7C may be positioned along the edge 9A extending according to the cross machine direction CD (the part of the edge defined by perforations 58 see FIGS. 8 and 9). The crosses 7C may be positioned according to inclined directions ID relatively to the cross machine direction CD. This is efficient to limit rattle and vibration when embossing cylinders are rotating at high industrial manufacturing speed. The fourth example of FIG. 6 differs from the second example of FIG. 3 in that the first pattern of association elements 7 comprises a mix of dots and of lines 7D inclined with respect to the cross machine direction CD. The lines 7D may form discontinuous crosses when considering an adjacent sheet. They may be positioned along the edge 9A extending according to the cross machine direction CD and the machine direction MD.

The following table illustrates dust measurements made on various samples based on a standard product and on the example embodiments:

| Sample Name | Sample Details (first association zone) | Total Grammage (g/m²) | Dust Counting | Dust Surface (mm²) |
|---|---|---|---|---|
| 5-ply product | Lotus Just-1 | 76 | 49 | 0.76 |
| Tissue/Fluff/Tissue No.1 | No edge embossing | 80 | 461 | 11.51 |
| Tissue/Fluff/Tissue No.2 | Knurling on the edges | 80 | 181 | 2.97 |
| Tissue/Fluff/Tissue No.3 | Edge embossing (14 dots/cm²) | 80 | 48 | 0.87 |

The above measurements are performed on four different samples of the same size and similar grammage according to the following methodology. Firstly, one sheet per sample is shaken 30 times over a black background. Secondly, a two-dimensional picture is taken with a camera equipped with a ring light. The ring light avoids, at least reduces light reflections. The camera and ring light are commercialized by Alicona, from Graz, Austria. Thirdly, the two-dimensional picture is analyzed, namely the dust elements (dust counting) with a size over 0.004 mm² over a surface of 387.5 mm² are detected and counted. The total surface (dust surface) is also estimated by summing the individual surface of each element. The image analysis is performed by using the imaging software QWin v3 commercialized by Leica Microsystems GmbH, from Wetzlar, Germany.

The standard product (5-ply product known by the trade name "Lotus Just-1" commercialized by Essity) does not contain loose cellulosic fibers (fluff) and is considered as a reference in term of dust generation. The table illustrates the effect of edge embossing as described in the example embodiments (Tissue/Fluff/Tissue structure according to FIGS. 1-3, 5 or 6) with respect to the limitation of dust generation. In particular, a multi-ply tissue paper product according to example embodiments referred as Tissue/Fluff/Tissue No.3 enables an efficient entrapment of the fluff material and shows a low level of dust generation that is satisfactory for the consumer.

FIG. 7 is a partial side cross-sectional view schematically illustrating a converting machine/line 100 arranged to manufacture coreless rolls 80. Converting machine/line 100 is not claimed as a part of the invention, although it may be used to implement the invention. In this example, the converting machine/line 100 comprises two unwinding units 10A and 10B, an inner layer of loose cellulosic fibers forming unit 20, a spraying unit 30, an embossing unit 40, a rewinding unit 50, and a log cutting unit 60.

More precisely, at the stage shown in FIG. 7, absorbent log base webs 2 and 3 have already been produced according to a known papermaking process. FIG. 7 illustrates a later stage which is a stage during which a converting process takes place. The converting process converts large parent log base webs 2 and 3 (e.g., having a strip width from about 0.50 m to about 7 m) into retail sized rolls 80 e.g., bathroom tissue rolls, paper towels rolls that may for example have a strip width from about 8 cm to about 40 cm). In this particular example, the converting machine/line 100 produces retail sized rolls having two outer plies 2 and 3, and one absorbent inner layer 4 including loose cellulosic fibers.

The first unwinding unit 10A provides a first absorbent log base web 2 from a first parent roll 11 (step S1).

The inner layer of loose cellulosic fibers forming unit 20 provides an inner layer of loose cellulosic fibers 4 onto the first absorbent log base web 2 (step S2). The forming unit 20 comprises a defibring unit 22 (e.g., hammer mill) that provides loose cellulosic fibers to a forming head 23 disposed above a conveyor belt 21 and a vacuum zone 24. The first absorbent log base web 2 leaving the first unwinding unit is supported by the conveyor belt 21. Once entering the forming unit 20, the loose cellulosic fibers are transferred from the forming head 23 towards the first absorbent log base web 2 by means of the suction force exerted by the vacuum zone 24 through the conveyor belt 21 and the first absorbent log base web 2. The conveyor belt 21 may be made of a fabric permeable to the air flow from the forming head 23 towards the vacuum zone 24.

The spraying unit 30 is an optional unit that comprises a spraying head 31 coupled to an appropriate adhesive container (not shown). The spraying unit 30 may spray/mist an adhesive 32 on one of the sides of the inner layer 4 (step S3) as depicted in FIG. 7. The adhesive may be a polyvinyl acetate glue, water or a hot-melt glue, for example. The adhesive may be diluted in water according to a proportion enabling an appropriate transfer to the various plies. The adhesive may be used to improve the internal cohesion of the loose cellulosic fibers within the inner layer 4. The adhesive may also be used to improve the association between the absorbent log base webs 2, 3 and the inner layer 4 during the embossing step that will explained hereinafter in relationship with step S5.

The second unwinding unit 10B provides a second absorbent log base web 3 from a second parent roll 12 (step S4).

Alternatively, further unwinding unit(s) may be installed along the line when it is intended to provide additional absorbent log base web(s) that will form one or more additional outer ply(ies) from one or more additional parent roll(s) (not shown).

The absorbent log base webs 2 and 3, and the inner layer of loose cellulosic fibers 4 are then fed to the embossing unit 40.

Various rollers 19 are appropriately positioned in order to control the path of the absorbent log base webs 2, 3 and 1 along the converting machine/line 100, within and between the various units 10A, 10B, 20, 30, 40, 50, 60. The absorbent log base webs 2, 3, the inner layer 4 travels into the converting machine/line 100 according to the machine direction MD from the unwinding units 10A and 10B, the forming unit 20, the spraying unit 30, towards the embossing unit 40, towards the rewinding unit 50 and towards the log cutting unit 60.

The embossing unit 40 comprises an engraved cylinder 43 and a mating rubber cylinder 42, both rotating in opposite directions. In the present example embodiment, the first absorbent log base web 2, the inner layer of loose cellulosic fibers 4, and the second absorbent log base web 3 are superposed and combined (associated) into the embossing unit 40 in order to form a web of absorbent substrate 1 (step S5). The engraved cylinder 43 may be engraved with a pattern combining the first association zone and second association zone patterns. The engraved cylinder 43 may thus perform at the same time the first association zone and second association zone embossing into the superposed absorbent log base webs 2, 3 and inner layer 4. The engraved cylinder 43 is applied with a defined calendering pressure onto the mating rubber cylinder 42. The engraved cylinder 43 may be further heated. These are used to combine both outer webs and also to emboss the absorbent log base webs 2, 3 in order to generate the association zones of the resulting web of absorbent substrate 1, as explained in relation with FIGS. 1-6. The inner layer of loose cellulosic fibers 4 is also associated to the absorbent log base webs 2, 3 as a result of their travel between the cylinders. Such steps are known in the art and therefore will not be described in details. Alternatively, the first association zone and the second association zone may be realized separately. For example, the second association zone may be realized by another means different from the engraved cylinder 43 and mating rubber cylinder 42 e.g., by a knurling module or an embossing cylinder.

As an alternative to the spraying unit 30, the adhesive may be delivered by a glue dispenser, before the joining occurs.

As an example, the height of the embossing protuberances may range between about 0.5 mm and about 1.2 mm, in particular between about 0.7 mm and about 1.1 mm, especially between about 0.8 mm and about 1.0 mm. This corresponds to embossing tips (engraving) on the cylinder having an engraving height ranging between about 0.5 mm and about 2.2 mm, in particular between about 0.7 mm and about 2.0 mm or in particular between about 1 mm and about 2 mm. The dots density for the embossing patterns of the first association pattern may have a density of at least about 10 dots/cm². The dots density for the embossing patterns of the second association pattern may have a density of less than about 2.5 dots/cm². Further, about 0.2% to about 20%, in particular about 0.5% to about 6% of the total surface between the first outer ply 2 and the second outer ply 3 is being glued.

The engraved cylinder calendering pressure is low, for example ranging from about 3 to about 5 bars. The engraved cylinder calendering temperature may range from about 60 to about 130°C. The combination of elements density of the first and second association zones and said low calendering pressure result in a low wear of the engraved cylinder during manufacturing.

The rewinding unit 50 comprises a perforating module 51A, a cutting module 51B and a winding module 52. The rewinding unit 50 winds the web of absorbent substrate 1 into multiple logs 61.

The perforating module 51A is arranged to provide the web of absorbent substrate 1 with regularly spaced perforation lines (Step S6) substantially transversally orientated relatively to the machine direction MD. In other words, the perforation lines are substantially orientated according to the cross-machine direction CD.

The cutting module 51B is arranged to sever the web of absorbent substrate 1 (Step S7) substantially transversally relatively to the machine direction. In other words, the separation line is substantially orientated according to the cross-machine direction CD. The severing of web occurs at a transition phase, namely when a first log is finished at the end of a log production cycle, and before a second subsequent log starts to be wound at the beginning of a new log production cycle.

The winding module 52 is arranged to rewind the web of absorbent substrate 1 so as to produce logs 61 of web of absorbent substrate (Step S8). For example, the winding module 52 is of the peripheral or the surface type. The winding module 52 comprises a rolling surface 53, a first winding roller 54, a second winding roller 55, a third winding roller 56 and a core supplier 57. The log 61 is formed by winding the web of absorbent substrate 1 onto a core 81 that maintains a well defined axial hollow passageway. The cores 81 are sequentially provided by the core supplier 27 through the rolling surface 53 before the beginning of a new log production cycle. As examples, the core can be made in cardboard. The log 61 is maintained in position during the winding by the first, second and third winding rollers 54, 55, 56 rotating in surface contact with the log 61. One of the winding rollers 54, 55, 56 imposes the rotation movement of the log 61.

The hereinbefore described winding module of the peripheral or the surface type is only an example. The present disclosure is also applicable to other kinds of winding modules, for example a winding module using a spindle (not shown).

The produced log 61 is then cut by multiple log saws 62 of the log cutting unit 60 into multiple and individual rolls 80 of absorbent sheet products (Step S9).

Thereafter, the individual coreless rolls 80 are packaged and prepared for shipping (not shown).

Alternatively and briefly, as it is known in the art, the rewinding unit 50 of the converting machine/line 100 may be replaced by a folding unit that cut, stack, fold individual sheets (e.g., towels and handkerchiefs) and gather into packages individual sheets of multi-ply tissue paper product 100.

Then, the resulting multi-ply tissue paper product may be used for example and without limitation, as a paper towel, toilet tissue roll, bathroom tissue, wiping tissue, kitchen tissue roll, facial tissue, or handkerchief.

A control module 70 is coupled to the perforating module 51A and to the cutting module 51B by means of an interface 71. The control module 70 controls the operation of the perforating module 51A and the cutting module 51B. In particular, the control module 70 activates the cutting module 51B to sever the web of absorbent substrate 1 at a transition phase between two consecutive logs. The control module 70 further controls the operation of the perforating module 51A out of transition phases. The control module 70 may further control the operation of the forming unit 20, namely the appropriate cellulosic loose fibers dispensing with respect to the manufacturing speed of the converting machine/line 100.

In the embodiment depicted in FIG. 7, the first unwinding unit 10A provides a first absorbent log base web 2 from a first parent roll 11, and the second unwinding unit 10B provides a second absorbent log base web 3 from a second parent roll 12. Either or both of the first 2 and second 3 absorbent log base webs may comprise either one ply or multiple plies. When the absorbent log base webs comprise multiple plies, those plies may be either already associated together, micro-embossed and/or embossed (preparation of the parent rolls at a previous step in another location), or micro-embossed, embossed and/or associated within the converting machine/line 100 just after the parent roll unwinding steps (concomitantly or slightly after step S1 and step S4).

FIG. 8 is a partial perspective view schematically illustrating the position of the first and second association zones with respect to a cutting line 59 into a web of absorbent substrate 1 at the transition between two logs Lₙ and Lₙ₊₁. Further, FIG. 9 schematically and partially illustrates the positioning of the perforation lines 58 and phantom lines 63 with respect to the first association zone and the second association zone.

The web of absorbent substrate 1 is fed into a space of the perforating module 51A comprising a perforator roll and a stationary anvil roll. There, the web of absorbent substrate 1 is pinched (step S6) with the desired perforation or tear lines 58 (schematically represented by dashed lines).

A perforation line 58 is a line according to a cross-machine direction CD made in the thickness of the web of absorbent substrate 1 and comprising alternating perforated segments and unperforated segments (i.e., two perforated segments being separated by one unperforated segment or vice-versa). Each unperforated segment forms an attachment area between two consecutive portions (according to the machine direction MD) of the web of absorbent substrate 1. Each perforated segment forms a detachment area between two consecutive portions (according to the machine direction MD) of the web of absorbent substrate 1. Considering the width of the individual roll, for example between about 10 cm and about 30 cm, the widths of the unperforated/perforated segments range, for example, between about 4 mm and about 10 mm. The hereinbefore described perforation line is a non-limiting example, as other kinds of perforation line are alternatively contemplated.

Two consecutive perforation lines 58 define the individual sheet length in the individual rolls 80 of absorbent material sheet. For example, a sheet of a bathroom tissue rolls may have a length of around a few dozen centimeters. In FIG. 8, multiple phantom lines 63 parallel to the machine direction MD are also represented on the web of absorbent substrate 1 for the sole purpose of illustration. The phantom lines 63 are spaced apart in the cross-machine direction CD. They schematically represent imaginary lines where the web of absorbent substrate 1 will be cut into multiple and individual rolls 80. Thus, two adjacent phantom lines define the eventual edges of an individual roll. The distance between two consecutive phantom lines is equal to the full width of the individual rolls 80.

After the pinching step, the web of absorbent substrate 1 is wound (step S8) onto the core 81 in order to form a log 61 by means of the winding module 52.

Once the desired log diameter (corresponding to a substantially defined number of individual sheets wound in the log) is reached, the web of absorbent substrate 1 is cut or severed. The produced log 61 is separated (step S8) from the web of absorbent substrate 1 and subsequently a new log begins to be produced. The web of absorbent substrate 1 is fed into a space of the cutting module 51B comprising a cutting roll and a stationary anvil roll. There, the web of absorbent substrate 1 is severed by a cutting line 59 (schematically represented by two parallel continuous lines).

Therefore, the multi-ply tissue paper product 1 is a strip comprising the regularly spaced perforations 58 defining individual product sections. The first association zone 5 is positioned along and from either side of the perforations 58 (cross-machine direction CD) on adjacent individual product sections, and also along and from either side of the phantom lines 63 (machine direction MD) on adjacent future roll products. The correct positioning of said perforations 58 and said phantom lines 63 with respect to the first association zone 5 is of importance in order to manufacture multi-ply tissue paper product 1 in accordance with the present disclosure.

The drawings and their descriptions hereinbefore are intended to illustrate rather than limit the embodiments contemplated herein.

The numbers, densities, positions and shapes of the patterns/embossments in the depicted embodiments are non limitative examples. The skilled person will readily recognize that these numbers, densities, positions and shapes may be changed if desired or deemed necessary with respect to, for example, the desired aesthetic effect to be achieved by the multi-ply tissue paper products provided that the characteristics of the first and second association zones as claimed are respected. In particular, despite the fact that the lines of elements (e.g., dots) are represented parallel to the edges or the perforation lines, such lines may be inclined relatively to the edges and/or the perforation lines. The number of outer plies may be doubled or more, for example on the top or/and the bottom of the product resulting into a product having three, four, five, or more plies. Also, the outer plies may be embossed or micro-embossed. In this case, the plies embossed or micro-embossed may be further associated by, for example, gluing or knurling techniques well known in the tissue industry.

In the preceding embodiments, the embossing protuberances may include corrugations, undulations, wave-like profiles, pyramid or cone based embossing protuberances, truncated pyramid or truncated cone embossing protuberances.

## Claims

1. A multi-ply tissue paper product (1) comprising at least two plies made of tissue paper base-sheet, comprising:
- a high caliper ranging from about 0.5 to about 1.5 mm, high bulk ranging from about 25 to about 75 cm3/g absorbent inner layer (4) including a fluff of loose cellulosic fibers positioned between a first outer ply (2) on one side and a second outer ply (3) on another side;
- a first association zone (5) and a second zone (6) where the inner layer (4), the first outer ply (2) and the second outer ply (3) are associated together by embossing;
wherein:
- the first association zone (5) is positioned at an edge (9A) of the multi-ply tissue paper product (1) according to a first pattern of association elements (7) having a high elements density corresponding to a surface association of at least about 6%, in particular at least about 8%, especially at least about 10% of a total surface of the multi-ply tissue paper product arranged to close the edge (9A) of the multi-ply tissue paper product (1) with respect to the loose cellulosic fibers; and
- the second zone (6) is positioned at a central usage area of the multi-ply tissue paper product (1);
wherein the first pattern of association elements comprises at least two parallel lines of association elements with a first distance (d1) between two adjacent lines less than half square root of three of a mean fluff fiber length (Im) and a second distance (d2) between adjacent association elements in a line less than the mean fluff fiber length (Im), and wherein the second zone (6) is a second association zone positioned at said central usage area of the multi-ply tissue paper product (1) according to a second pattern of association elements (8) having an elements density corresponding to a surface association ranging from about 1.5% to about 3% of said central usage area of said product arranged to stabilize the loose cellulosic fibers in-between the first outer ply (2) and the second outer ply (3).

2. The multi-ply tissue paper product of claim 1, wherein the second zone (6) is a second association zone positioned at said central usage area of the multi-ply tissue paper product (1) according to a second pattern of association elements (8) defined such that in a circle ranging from about 0.9 to about 1.1 of the mean fluff fiber length (Im) around each association element, a ratio between a maximum thickness of the product and a minimum thickness of the product within said circle is above about 14 such as to stabilize the loose cellulosic fibers in-between the first outer ply (2) and the second outer ply (3).

3. The multi-ply tissue paper product according to anyone of the preceding claims, wherein the multi-ply tissue paper product is a strip comprising regularly spaced perforations (58) defining individual product sections, and wherein the first association zone (5) is further positioned along perforations (58) on adjacent individual product sections.

4. The multi-ply tissue paper product according to anyone of the preceding claims, wherein the first association zone (5) covers up to about 50% of a total surface of the multi-ply tissue paper product (1), and the second zone (6) covers a remaining surface amounting more than about 50% of said total surface.

5. The multi-ply tissue paper product according to anyone of the preceding claims, wherein each of the first (2) and second (3) outer plies has a grammage ranging from about 10 to about 60 g/m2, in particular from about 15 to about 40 g/m2, most particularly from about 15 to about 25 g/m2, respectively.

6. The multi-ply tissue paper product according to anyone of the preceding claims, wherein the inner layer (4) is made of fluff material and has a grammage ranging from about 20 to about 60 g/m2, in particular from about 25 to about 55 g/m2, most particularly from about 30 to about 50 g/m2.

7. A method of manufacturing a multi-ply tissue paper product (1) comprising at least two plies made of tissue paper base-sheet, a high caliper ranging from about 0.5 to about 1.5 mm, high bulk ranging from about 25 to about 75 cm3/g absorbent inner layer (4) including loose cellulosic fibers being positioned between a first outer ply (2) on one side and a second outer ply (3) on another side, wherein the manufacturing method includes:
- interposing (S1, S2, S4) the loose cellulosic fibers inner layer (4) in-between the first and second outer plies (2, 3);
- associating (S5) together by embossing the first outer ply (2), the inner layer (4) and the second outer ply (3) by means of a first association zone (5) and a second zone (6) at a central usage area of the multi-ply tissue paper product by embossing the first association zone (5) at an edge (9A) of the multi-ply tissue paper product (1) according to a first pattern of association elements (7) having a high elements density corresponding to a surface association of at least about 6%, in particular at least about 8%, especially at least about 10% of a total surface of said product such as to close the edge of the multi-ply tissue paper product with respect to the loose cellulosic fibers;
wherein embossing the first pattern of association elements includes providing the edge of the multi-ply tissue paper product with at least two parallel lines of association elements with a first distance (d1) between two adjacent lines less than half square root of three of a mean fluff fiber length Im and a second distance (d2) between adjacent association elements in a line less than the mean fluff fiber length (Im), and
wherein the step of associating (S5) together the first outer ply (2), the inner layer (4) and the second outer ply (3) further comprises embossing the second zone (6) as a second association zone at said central usage area of the multi-ply tissue paper product (1) according to a second pattern of association elements (8) having an elements density corresponding to a surface association ranging from about 1.5% to about 3% of said central usage area of said product such as to stabilize the loose cellulosic fibers in-between the first outer ply (2) and the second outer ply (3).

8. The manufacturing method of claim 7, wherein the step of associating (S5) together the first outer ply (2), the inner layer (4) and the second outer ply (3) further comprises embossing the second association zone at a central usage area of the multi-ply tissue paper product according to a second pattern of association elements (8) defined such that in a circle ranging from about 0.9 to about 1.1 of the mean fluff fiber length (Im) around each association element, a ratio between a maximum thickness of the product and a minimum thickness of the product within said circle is above about 14 such as to stabilize the loose cellulosic fibers in-between the first outer ply (2) and the second outer ply (3).

9. The manufacturing method according to anyone of the claims 7 and 8, further including the step of spraying (S3) the absorbent inner layer (4) with an adhesive (32) prior to the association step (S5).

10. The manufacturing method according to anyone of the claims 7 to 9, wherein the multi-ply tissue paper product is formed as a continuous strip comprising regularly spaced perforations (58) defining individual product sections, and wherein embossing the first association (5) zone further includes embossing along perforations (58) on adjacent individual product sections.

11. A roll of sheet material (80) comprising a multi-ply tissue paper product (1) according to anyone of the claims 1 to 6 wound onto a core (81).

12. A folded sheet material comprising a multi-ply tissue paper product according to anyone of the claims 1 to 6 cut, stacked and folded into a package.

13. Use of a multi-ply tissue paper product according to anyone of the claims 1 to 6 as paper towels, toilet tissue rolls, bathroom tissues, wiping tissues, kitchen tissue rolls, facial tissues, handkerchiefs or napkins.

## Patentansprüche

1. Mehrlagiges Tissuepapierprodukt (1), umfassend mindestens zwei Lagen, die aus einem Basisbogen aus Tissuepapier hergestellt sind, umfassend:
- eine hohe Dicke, die von etwa 0,5 bis etwa 1,5 mm reicht, eine hohe Dichte, die von etwa 25 bis etwa 75 cm3/g absorbierender Innenschicht (4) reicht, einschließlich einer Fluse von losen zellulosischen Fasern, die zwischen einer ersten äußeren Lage (2) an einer Seite und einer zweiten äußeren Lage (3) an einer anderen Seite positioniert ist;
- einen ersten Verbindungsbereich (5) und einen zweiten Bereich (6), wo die innere Lage (4), die erste äußere Lage (2) und die zweite äußere Lage (3) durch Prägung miteinander verbunden sind;
wobei:
- der erste Verbindungsbereich (5) an einem Rand (9A) des mehrlagigen Tissuepapierprodukts (1) gemäß einem ersten Muster von Verbindungselementen (7) positioniert ist, das eine hohe Elementedichte aufweist, die einer Oberflächenverbindung von mindestens etwa 6%, insbesondere mindestens etwa 8%, besonders mindestens etwa 10% einer Gesamtoberfläche des mehrlagigen Tissuepapierprodukts entspricht, eingerichtet, um den Rand (9A) des mehrlagigen Tissuepapierprodukts (1) in Bezug auf die losen zellulosischen Fasern zu verschließen; und
- der zweite Bereich (6) in einer mittleren Verwendungsfläche des mehrlagigen Tissuepapierprodukts (1) positioniert ist;
wobei das erste Muster von Verbindungselementen mindestens zwei parallele Linien von Verbindungselementen mit einem ersten Abstand (d1) zwischen zwei benachbarten Linien kleiner als eine halbe Quadratwurzel von drei einer durchschnittlichen Flusenfaserlänge (Im) und einem zweiten Abstand (d2) zwischen benachbarten Verbindungselementen in einer Linie kleiner als die durchschnittliche Flusenfaserlänge (Im) umfasst, und wobei der zweite Bereich (6) ein zweiter Verbindungsbereich ist, der an der mittleren Verwendungsfläche des mehrlagigen Tissuepapierprodukts (1) gemäß einem zweiten Muster von Verbindungselementen (8) positioniert ist, das eine Elementedichte aufweist, die einer Oberflächenverbindung entspricht, die von etwa 1,5 bis etwa 3% der mittleren Verwendungsfläche des Produkts reicht, eingerichtet, um die losen zellulosischen Fasern zwischen der ersten äußeren Lage (2) und der zweiten äußeren Lage (3) zu stabilisieren.

2. Mehrlagiges Tissuepapierprodukt nach Anspruch 1, wobei der zweite Bereich (6) ein zweiter Verbindungsbereich ist, der an der mittleren Verwendungsfläche des mehrlagigen Tissuepapierprodukts (1) gemäß einem zweiten Muster von Verbindungselementen (8) positioniert ist, das derart definiert ist, dass in einem Kreis um jedes Verbindungselement, der von etwa 0,9 bis etwa 1,1 der durchschnittlichen Flusenfaserlänge (Im) reicht, ein Verhältnis zwischen einer maximalen Dicke des Produkts und einer minimalen Dicke des Produkts innerhalb des Kreises mehr als etwa 14 beträgt, sodass die losen zellulosischen Fasern zwischen der ersten äußeren Lage (2) und der zweiten äußeren Lage (3) stabilisiert werden.

3. Mehrlagiges Tissuepapierprodukt nach einem der vorstehenden Ansprüche, wobei das mehrlagige Tissuepapierprodukt ein Streifen ist, der regelmäßig beabstandete Perforierungen (58) umfasst, die einzelne Produktabschnitte definieren, und wobei der erste Verbindungsbereich (5) weiter entlang von Perforierungen (58) an benachbarten einzelnen Produktabschnitten positioniert ist.

4. Mehrlagiges Tissuepapierprodukt nach einem der vorstehenden Ansprüche, wobei der erste Verbindungsbereich (5) bis zu etwa 50% einer Gesamtoberfläche des mehrlagigen Tissuepapierprodukts (1) bedeckt und der zweite Bereich (6) eine restliche Oberfläche, die sich auf nicht mehr als 50% der Gesamtoberfläche beläuft, bedeckt.

5. Mehrlagiges Tissuepapierprodukt nach einem der vorstehenden Ansprüche, wobei jede der ersten (2) und zweiten (3) äußeren Lage ein Flächengewicht aufweist, das jeweils von etwa 10 bis etwa 60g/m2, insbesondere von etwa 15 bis etwa 40g/m2, ganz besonders von etwa 15 bis etwa 25 g/m2 reicht.

6. Mehrlagiges Tissuepapierprodukt nach einem der vorstehenden Ansprüche, wobei die innere Lage (4) aus Flusenmaterial hergestellt ist und ein Flächengewicht aufweist, das von etwa 20 bis etwa 60g/m2, insbesondere von etwa 25 bis etwa 55 g/m2, ganz besonders von etwa 30 bis etwa 50 g/m2 reicht.

7. Verfahren zum Herstellen eines mehrlagigen Tissuepapierprodukts (1), umfassend mindestens zwei Lagen, die aus einem Basisbogen aus Tissuepapier hergestellt sind, eine hohe Dicke, die von etwa 0,5 bis etwa 1,5 mm reicht, eine hohe Dichte, die von etwa 25 bis etwa 75 cm3/g absorbierender Innenschicht (4) reicht, einschließlich loser zellulosischer Fasern, die zwischen einer ersten äußeren Lage (2) an einer Seite und einer zweiten äußeren Lage (3) an einer anderen Seite positioniert sind, wobei das Herstellungsverfahren Folgendes einschließt:
- Einfügen (S1, S2, S4) der inneren Schicht (4) mit den losen zellulosischen Fasern zwischen der ersten und zweiten äußeren Lage (2, 3);
- Verbinden (S5) der ersten äußeren Lage (2), der inneren Lage (4) und der zweiten äußeren Lage (3) mittels eines ersten Verbindungsbereichs (5) und eines zweiten Bereichs (6) miteinander durch Prägung an einer mittleren Verwendungsfläche des mehrlagigen Tissuepapierprodukts durch Prägung des ersten Verbindungsbereichs (5) an einem Rand (9A) des mehrlagigen Tissuepapierprodukts (1) gemäß einem ersten Muster von Verbindungselementen (7), das eine hohe Elementedichte aufweist, die einer Oberflächenverbindung von mindestens etwa 6%, insbesondere mindestens etwa 8%, besonders mindestens etwa 10% einer Gesamtoberfläche des Produkts entspricht, sodass der Rand des mehrlagigen Tissuepapierprodukts in Bezug auf die losen zellulosischen Fasern verschlossen wird;
wobei Prägung des ersten Musters von Verbindungselementen einschließt, den Rand des mehrlagigen Tissuepapierprodukts mit mindestens zwei parallelen Linien von Verbindungselementen mit einem ersten Abstand (d1) zwischen zwei benachbarten Linien kleiner als eine halbe Quadratwurzel von drei einer durchschnittlichen Flusenfaserlänge Im und einem zweiten Abstand (d2) zwischen benachbarten Verbindungselementen in einer Linie kleiner als die durchschnittliche Flusenfaserlänge (Im) zu versehen, und
wobei der Schritt des Verbindens (S5) der ersten äußeren Lage (2), der inneren Lage (4) und der zweiten äußeren Lage (3) miteinander weiter Prägung des zweiten Bereichs (6) als einen Verbindungsbereich an der mittleren Verwendungsfläche des mehrlagigen Tissuepapierprodukts (1) gemäß einem zweiten Muster von Verbindungselementen (8) umfasst, das eine Elementedichte aufweist, die einer Oberflächenverbindung entspricht, die von etwa 1,5% bis etwa 3% des mittleren Verwendungsbereichs des Produkts reicht, sodass die losen zellulosischen Fasern zwischen der ersten äußeren Lage (2) und der zweiten äußeren Lage (3) stabilisiert werden.

8. Herstellungsverfahren nach Anspruch 7, wobei der Schritt des Verbindens (S5) der ersten äußeren Lage (2), der inneren Lage (4) und der zweiten äußeren Lage (3) miteinander weiter Prägung des zweiten Verbindungsbereichs an einer mittleren Verwendungsfläche des mehrlagigen Tissuepapierprodukts gemäß einem zweiten Muster von Verbindungselementen (8) umfasst, das derart definiert ist, dass ein einem Kreis um jedes Verbindungselement, der von etwa 0,9 bis etwa 1,1 der durchschnittlichen Flusenfaserlänge (Im) reicht, ein Verhältnis zwischen einer maximalen Dicke des Produkts und einer minimalen Dicke des Produkts innerhalb des Kreises mehr als etwa 14 beträgt, sodass die losen zellulosischen Fasern zwischen der ersten äußeren Lage (2) und der zweiten äußeren Lage (3) stabilisiert werden.

9. Herstellungsverfahren nach einem der Ansprüche 7 und 8, das weiter den Schritt des Besprühens (S3) der absorbierenden inneren Lage (4) mit einem Haftmittel (32) vor dem Verbindungsschritt (S5) einschließt.

10. Herstellungsverfahren nach einem der Ansprüche 7 bis 9, wobei das mehrlagige Tissuepapierprodukt als ein durchgehender Streifen gebildet ist, der regelmäßig beabstandete Perforierungen (58) umfasst, die einzelne Produktabschnitte definieren, und wobei Prägung des ersten Verbindungsbereichs (5) weiter Prägung entlang von Perforierungen (58) an benachbarten einzelnen Produktabschnitten einschließt.

11. Rolle eines Bogenmaterials (80), umfassend ein mehrlagiges Tissuepapierprodukt (1) nach einem der Ansprüche 1 bis 6, das um einen Kern (81) gewickelt ist.

12. Gefaltetes Bogenmaterial, umfassend ein mehrlagiges Tissuepapierprodukt nach einem der Ansprüche 1 bis 6, das geschnitten, gestapelt und in eine Packung gefaltet ist.

13. Verwendung eines mehrlagigen Tissuepapierprodukts nach einem der Ansprüche 1 bis 6 als Papierhandtücher, Toilettenpapierrollen, Toilettenpapiere, Wischtücher, Küchenwischtuchrollen, Gesichtstücher, Taschentücher oder Servietten.

## Revendications

1. Produit en papier sanitaire multicouche (1) comprenant au moins deux couches réalisées en feuille de base de papier sanitaire, comprenant :
- une couche interne absorbante (4) à fort calibre, allant d'environ 0,5 à environ 1,5 mm, à fort encombrement, allant d'environ 25 à environ 75 cm3/g comprenant un duvet de fibres cellulosiques lâches positionnées entre une première couche extérieure (2) d'un côté et une seconde couche extérieure (3) sur un autre côté ;
- une première zone d'association (5) et une seconde zone (6) où la couche interne (4), la première couche extérieure (2) et la seconde couche extérieure (3) sont associées ensemble par gaufrage ;
dans lequel :
- la première zone d'association (5) est positionnée au niveau d'un bord (9A) du produit en papier sanitaire multicouche (1) selon un premier motif d'éléments d'association (7) ayant une densité élevée d'éléments correspondant à une association de surface d'au moins environ 6 %, en particulier d'au moins environ 8 %, spécialement d'au moins environ 10 % d'une surface totale du produit en papier sanitaire multicouche agencée pour fermer le bord (9A) du produit en papier sanitaire multicouche (1) par rapport aux fibres cellulosiques lâches ; et
- la seconde zone (6) est positionnée au niveau d'une zone d'utilisation centrale du produit en papier sanitaire multicouche (1) ;
dans lequel le premier motif d'éléments d'association comprend au moins deux lignes parallèles d'éléments d'association avec une première distance (d1) entre deux lignes adjacentes inférieure à la moitié de la racine carrée de trois fois la longueur moyenne des fibres de duvet (lm) et une seconde distance (d2) entre des éléments d'association adjacents dans une ligne inférieure à la longueur moyenne des fibres de duvet (lm), et
dans lequel la seconde zone (6) est une seconde zone d'association positionnée au niveau de ladite zone d'utilisation centrale du produit en papier sanitaire multicouches (1) selon un second motif d'éléments d'association (8) ayant une densité d'éléments correspondant à une association de surface allant d'environ 1,5 % à environ 3 % de ladite zone d'utilisation centrale dudit produit agencé pour stabiliser les fibres cellulosiques lâches entre la première couche extérieure (2) et la seconde couche extérieure (3).

2. Produit en papier sanitaire multicouche selon la revendication 1, dans lequel la seconde zone (6) est une seconde zone d'association positionnée au niveau de ladite zone d'utilisation centrale du produit en papier sanitaire multicouche (1) selon un second motif d'éléments d'association (8) défini de telle sorte que dans un cercle allant d'environ 0,9 à environ 1,1 fois la longueur moyenne des fibres de duvet (lm) autour de chaque élément d'association, un rapport entre une épaisseur maximale du produit et une épaisseur minimale du produit à l'intérieur dudit cercle est supérieur à environ 14 de manière à stabiliser les fibres cellulosiques lâches entre la première couche extérieure (2) et la seconde couche extérieure (3).

3. Produit en papier sanitaire multicouche selon l'une quelconque des revendications précédentes, dans lequel le produit en papier sanitaire multicouche est une bande comprenant des perforations régulièrement espacées (58) définissant des sections de produit individuelles, et dans lequel la première zone d'association (5) est en outre positionnée le long des perforations (58) sur des sections de produit individuelles adjacentes.

4. Produit en papier sanitaire multicouche selon l'une quelconque des revendications précédentes, dans lequel la première zone d'association (5) couvre jusqu'à environ 50% d'une surface totale du produit en papier sanitaire multicouche (1), et la seconde zone (6) couvre une surface restante représentant plus d'environ 50% de ladite surface totale.

5. Produit en papier sanitaire multicouche selon l'une quelconque des revendications précédentes, dans lequel chacune des première (2) et seconde (3) couches extérieures a un grammage compris entre environ 10 et environ 60 g/m2, en particulier entre environ 15 et environ 40 g/m2, plus particulièrement entre environ 15 et environ 25 g/m2, respectivement.

6. Produit en papier sanitaire multicouche selon l'une quelconque des revendications précédentes, dans lequel la couche interne (4) est réalisée en matériau duveteux et présente un grammage allant d'environ 20 à environ 60 g/m2, notamment d'environ 25 à environ 55 g/m2, tout particulièrement d'environ 30 à environ 50 g/m2.

7. Procédé de fabrication d'un produit en papier sanitaire multicouche (1) comprenant au moins deux couches constituées d'une feuille de base en papier sanitaire, une couche interne absorbante (4) ayant une épaisseur élevée comprise entre environ 0,5 et environ 1,5 mm, un encombrement élevé compris entre environ 25 et environ 75 cm3/g, comprenant des fibres cellulosiques lâches positionnées entre une première couche extérieure (2) d'un côté et une deuxième couche extérieure (3) de l'autre côté, dans lequel le procédé de fabrication comprend :
- l'interposition (S1, S2, S4) de la couche interne de fibres cellulosiques lâches (4) entre les première et seconde couches extérieures (2, 3) ;
- l'association (S5), par gaufrage, de la première couche extérieure (2), de la couche interne (4) et de la seconde couche extérieure (3) au moyen d'une première zone d'association (5) et d'une seconde zone (6) au niveau d'une zone d'utilisation centrale du produit en papier sanitaire multicouche, par gaufrage de la première zone d'association (5) au niveau d'un bord (9A) du produit en papier sanitaire multicouche (1) selon un premier motif d'éléments d'association (7) ayant une densité d'éléments élevée correspondant à une association de surface d'au moins environ 6 %, en particulier d'au moins environ 8 %, spécialement d'au moins environ 10 % de la surface totale dudit produit, de manière à fermer le bord du produit en papier sanitaire multicouche par rapport aux fibres cellulosiques lâches ;
dans lequel le gaufrage du premier motif d'éléments d'association comprend la fourniture du bord du produit en papier sanitaire multicouche avec au moins deux lignes parallèles d'éléments d'association avec une première distance (d1) entre deux lignes adjacentes inférieure à la moitié de la racine carrée de trois fois la longueur moyenne des fibres de duvet lm et une seconde distance (d2) entre les éléments d'association adjacents dans une ligne inférieure à la longueur moyenne des fibres de duvet (lm), et
dans lequel l'étape d'association (S5) de la première couche extérieure (2), de la couche interne (4) et de la seconde couche extérieure (3) comprend en outre le gaufrage de la seconde zone (6) en tant que seconde zone d'association au niveau de ladite zone d'utilisation centrale du produit en papier sanitaire multicouche (1) selon un second motif d'éléments d'association (8) ayant une densité d'éléments correspondant à une association de surface allant d'environ 1.5 % à environ 3 % de ladite zone d'utilisation centrale dudit produit de façon à stabiliser les fibres cellulosiques lâches entre la première couche extérieure (2) et la deuxième couche extérieure (3).

8. Procédé de fabrication selon la revendication 7, dans lequel l'étape d'association (S5) de la première couche extérieure (2), de la couche interne (4) et de la seconde couche extérieure (3) comprend en outre le gaufrage de la seconde zone d'association au niveau d'une zone d'utilisation centrale du produit en papier sanitaire multicouche selon un second motif d'éléments d'association (8) défini de telle sorte que dans un cercle allant d'environ 0,9 à environ 1,1 fois la longueur moyenne des fibres de duvet (lm) autour de chaque élément d'association, le rapport entre l'épaisseur maximale du produit et l'épaisseur minimale du produit à l'intérieur dudit cercle est supérieur à environ 14 de façon à stabiliser les fibres cellulosiques lâches entre la première couche extérieure (2) et la seconde couche extérieure (3).

9. Procédé de fabrication selon l'une quelconque des revendications 7 et 8, comprenant en outre l'étape de pulvérisation (S3) de la couche interne absorbante (4) avec un adhésif (32) avant l'étape d'association (S5).

10. Procédé de fabrication selon l'une quelconque des revendications 7 à 9, dans lequel le produit en papier sanitaire multicouche est formé comme une bande continue comprenant des perforations régulièrement espacées (58) définissant des sections de produit individuelles, et dans lequel le gaufrage de la première zone d'association (5) comprend en outre le gaufrage le long des perforations (58) sur des sections de produit individuelles adjacentes.

11. Rouleau de matériau en feuille (80) comprenant un produit en papier sanitaire multicouche (1) selon l'une quelconque des revendications 1 à 6 enroulé sur un noyau (81).

12. Matériau en feuille plié comprenant un produit en papier sanitaire multicouche selon l'une quelconque des revendications 1 à 6 coupé, empilé et plié en un emballage.

13. Utilisation d'un produit en papier sanitaire multicouche selon l'une quelconque des revendications 1 à 6 comme serviettes en papier, rouleaux de papier hygiénique, mouchoirs en papier de salle de bain, mouchoirs en papier d'essuyage, rouleaux de papier de cuisine, mouchoirs en papier, mouchoirs à main ou serviettes de table.
